(19) Europäisches Patentamt
European Patent Office
Office européen des brevets

(11) EP 2 779 153 A1

(12) EUROPEAN PATENT APPLICATION

(43) Date of publication:
17.09.2014 Bulletin 2014/38

(51) Int Cl.:
G09G 5/14 (2006.01)     A63B 71/06 (2006.01)

(21) Application number: 14159775.7

(22) Date of filing: 14.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.03.2013 KR 20130027588

(71) Applicant: Samsung Electronics Co., Ltd.
Suwon-si Gyeonggi-do 443-742 (KR)

(72) Inventors:
• Kim, Yu-Sic
Gyeonggi-do (KR)
• Seung, Jung-Ah
Gyeonggi-do (KR)
• Shin, Jon-Woo
Gyeonggi-do (KR)
• Yoo, Yun-Ji
Seoul (KR)

(74) Representative: Nederlandsch Octrooibureau
P.O. Box 29720
2502 LS The Hague (NL)

(54) **Method for displaying dynamic image and electronic device therefor**

(57) An apparatus and method for displaying images dynamically in an electronic device, e.g. a mobile communication terminal, based on current state information of the electronic device are described. One method for dynamically displaying images in the electronic device includes determining a respective image conversion weight for each of a plurality of images (511, 513, 515, 517). Using e.g. a Global Positioning System (GPS) receiver or an acceleration sensor, a moving velocity of the electronic device, i.e. as a result of running or walking of the user, is determined and each of the images is displayed based on its respective image conversion weight and the moving velocity.

FIG.5A

## Description

## TECHNICAL FIELD

The present disclosure relates generally to an apparatus and method for displaying an image in an electronic device, and more particularly to an apparatus and method for dynamically displaying one or more images in an electronic device based on the current state information of the electronic device.

## BACKGROUND

Electronic devices which have become necessities for modem people due to their easy portability now include multimedia devices that provide a variety of services, such as voice and video communication functions, information input and output functions, and data transmission and reception.

Such electronic devices are provided with a display to display state information thereof, characters inputted by a user, moving pictures, and static pictures. As many electronic devices are provided with sensors to provide data on the velocity, location, altitude, and moving direction of the electronic device, a variety of services using these types of state information have developed.

For example, an electronic device can monitor and provide the state of exercise of a user through a jogging program. Such an electronic device may simply display at least one of the current step count, the target step count, the distance traversed, the current velocity, and calories so far consumed by the user in text or one or more gauges displayed on the display of the electronic device.

Such electronic devices need a method for displaying state information dynamically.

## SUMMARY

The present disclosure addresses at least the above problems and/or disadvantages and provides at least the advantages described below. Accordingly, one object of the present disclosure is to provide an apparatus and method for displaying an image dynamically in an electronic device based on the state information of the electronic device.

Another object of the present disclosure is to provide an apparatus and method for dynamically displaying an image in an electronic device based on the current velocity of the electronic device.

Another object of the present disclosure is to provide an apparatus and method for magnifying and displaying an image in an electronic device based on the current velocity of the electronic device.

Another object of the present disclosure is to provide an apparatus and method for dynamically displaying an image in an electronic device based on the altitude of the electronic device.

Another object of the present disclosure is to provide an apparatus and method for magnifying and displaying an image in an electronic device based on the altitude of the electronic device.

Another object of the present disclosure is to provide an apparatus and method for changing and displaying slope of an image in an electronic device based on the altitude of the electronic device.

Another object of the present disclosure is to provide an apparatus and method for dynamically displaying an image in an electronic device based on the current velocity and altitude of the electronic device.

According to an aspect of the present disclosure, a method in an electronic device includes determining an image conversion weight for each of a plurality of images shown on a screen of the electronic device; determining a current velocity of the electronic device; and displaying each of the plurality of images based on the image conversion weight and the current velocity.

According to another aspect of the present disclosure, a method in an electronic device includes determining an image conversion weight for each of the plurality of images; determining a current velocity and altitude of the electronic device; and displaying each of the plurality of images based on the image conversion weight, the current velocity, and the altitude.

According to another aspect of the present disclosure, a method for displaying a dynamic image in an electronic device includes determining an image conversion weight for each of a plurality of images; determining at least one of a current velocity and current altitude of the electronic device at a first time and a second time; calculating at least one of an nonlinear velocity and an nonlinear altitude using the determined at least one of current velocity and altitude; and displaying each of the plurality of images based on the image conversion weight and the calculated at least one of an nonlinear velocity and nonlinear altitude.

According to another aspect of the present disclosure, an electronic device includes at least one processor; at least one sensor unit; and at least one non-transitory computer-readable medium having program instructions recorded thereon, the program instructions configured to have the at least one processor perform one or more steps of: determining an image conversion weight for each of the plurality of images, determining a current velocity of the electronic device, and displaying each of the plurality of images based on the image conversion weight and the current velocity.

According to another aspect of the present disclosure, an electronic device includes at least one processor; at least one sensor unit; and at least one non-transitory computer-readable medium having program instructions recorded thereon, the program instructions configured to have the at least one processor perform one or more steps of: determining an image conversion weight for each of a plurality of images, determining a current velocity and altitude of the electronic device, and

displaying each of the plurality of images based on the image conversion weight and the current velocity and altitude.

According to another aspect of the present disclosure, an electronic device includes at least one processor; at least one sensor unit; and at least one non-transitory computer-readable medium having program instructions recorded thereon, the program instructions configured to have the at least one processor perform one or more steps of: determining an image conversion weight for each of a plurality of images; determining at least one of a current velocity and a current altitude of the electronic device at a first time and a second time; calculating at least one of an nonlinear velocity and nonlinear altitude using the determined at least one of current velocity and altitude; and displaying each of the plurality of images based on the image conversion weight and the calculated at least one of nonlinear velocity and nonlinear altitude.

According to another aspect of the present disclosure, a method in an electronic device comprising: determining an image conversion weight for each of a plurality of images shown on a screen of the electronic device; determining a current velocity of the electronic device; and displaying each of the plurality of images based on the image conversion weight and the current velocity.

Preferably, the method is wherein determining the current velocity comprises: determining the current velocity using at least one of a Global Positioning System (GPS) receiver, an acceleration sensor, and a terrestrial magnetism sensor.

Preferably, the method is wherein displaying each of the plurality of images comprises: displaying each of the plurality of images from the left to the right or from the right to the left based on the image conversion weight and the current velocity.

Preferably, the method is further comprising: determining a moving direction of the electronic device.

Preferably, the method is wherein, when the moving direction is changed, a direction of displaying the plurality of images is changed to correspond to the moving direction.

Preferably, the method is wherein displaying each of the plurality of images comprises: based on the image conversion weight and the current velocity, magnifying or reducing, and then displaying, each of the plurality of images .

Preferably, the method is determining an image conversion weight for each of a plurality of images; determining a current velocity and altitude of the electronic device; and displaying each of the plurality of images based on the image conversion weight, the current velocity, and the altitude.

Preferably, the method is wherein determining the current velocity and altitude comprises: determining the current velocity and altitude using at least one of a Global Positioning System (GPS) receiver, an acceleration sensor, a terrestrial magnetism sensor, and a pressure sensor.

Preferably, the method is wherein displaying each of the plurality of images comprises: displaying each of the plurality of images from the left to the right or from the right to the left based on the image conversion weight and the current velocity; and changing and displaying a slope of each of the images based on the altitude.

Preferably, the method is further comprising: determining a moving direction of the electronic device.

Preferably, the method is wherein, when the moving direction is changed, a direction of displaying the plurality of images is changed to correspond to the moving direction.

Preferably, the method is wherein displaying each of the plurality of images comprises: based on the image conversion weight and the current velocity, magnifying or reducing, and then displaying, each of the plurality of images .

Preferably, the method is wherein displaying each of the plurality of images comprises: based on the image conversion weight and the current altitude, either magnifying or reducing, and then displaying, each of the plurality of images .

Preferably, the method is wherein displaying each of the plurality of images comprises: displaying each of the plurality of images up and down based on the image conversion weight, the current velocity, and the current altitude.

Preferably, the method is displaying a dynamic image in an electronic device comprising: determining an image conversion weight for each of a plurality of images; determining a velocity of the electronic device at a first time and a second time; determining a nonlinear velocity using the determined velocity; and displaying each of the plurality of images based on the image conversion weight and the determined nonlinear velocity.

Preferably, the method is wherein determining nonlinear velocity comprises: determining a variation of the velocity between the first time and the second time; applying a weight value to the variation of the velocity; adding the applied variation to the velocity of the first time; determining the added velocity as the nonlinear velocity.

Preferably, the device is comprising: at least one processor; at least one sensor unit; and at least one non-transitory computer-readable medium having program instructions recorded thereon, the program instructions configured to have the at least one processor perform the steps of: determining an image conversion weight for each of a plurality of images shown on a screen of the electronic device, determining a current velocity of the electronic device, and displaying each of the plurality of images based on the image conversion weight and the current velocity.

Preferably, the device is wherein the at least one processor determines the current velocity using at least one of a Global Positioning System (GPS) receiver, an acceleration sensor, and a terrestrial magnetism sensor.

Preferably, the device is wherein the at least one processor displays each of the plurality of images from the left to the right or from the right to the left based on the image conversion weight and the current velocity.

Preferably, the device is wherein the program instructions are further configured to have the at least one processor determine a moving direction of the electronic device.

Preferably, the device is wherein the program instructions are further configured to have, when the moving direction is changed, the at least one processor change a direction of displaying the plurality of images to correspond with the moving direction.

Preferably, the device is wherein the program instructions are further configured to have the at least one processor, based on the image conversion weight and the current velocity, either magnify or reduce, and then display, each of the plurality of images.

Preferably, the device is at least one processor; at least one sensor unit; and at least one non-transitory computer-readable medium having program instructions recorded thereon, the program instructions configured to have the at least one processor perform the steps of: determining an image conversion weight for each of a plurality of images, determining a current velocity and altitude of the electronic device, and displaying each of the plurality of images based on the image conversion weight and the current velocity and altitude.

Preferably, the device is wherein the at least one processor determines the current velocity and altitude using at least one of a Global Positioning System (GPS) receiver, an acceleration sensor, a terrestrial magnetism sensor, and a pressure sensor.

Preferably, the device is wherein the at least one processor converts and displays each of the images from the left to the right or from the right to the left based on the image conversion weight and the current velocity; and changes and displays a slope of each of the images based on the current altitude.

Preferably, the device is wherein the program instructions are further configured to have the at least one processor determine a moving direction of the electronic device.

Preferably, the device is wherein the program instructions are further configured to have, when the moving direction is changed, the at least one processor change a direction of displaying the plurality of images to correspond with the moving direction.

Preferably, the device is wherein the program instructions are further configured to have the at least one processor, based on the image conversion weight and the current velocity, either magnify or reduce, and then display, each of the plurality of images.

Preferably, the device is wherein the program instructions are further configured to have the at least one processor, based on the image conversion weight and the altitude, either magnify or reduce, and then display, each of the plurality of images .

Preferably, the device is wherein the at least one processor displays each of the plurality of images up and down based on the image conversion weight and the current velocity and altitude.

Preferably, the device is comprising: at least one processor; at least one sensor unit; and at least one non-transitory computer-readable medium having program instructions recorded thereon, the program instructions configured to have the at least one processor perform the steps of: determining an image conversion weight for each of a plurality of images; determining a velocity of the electronic device at a first time and a second time; ditermining a nonlinear velocity using the velocity; and displaying each of the plurality of images based on the image conversion weight and the determined nonlinear velocity.

Preferably, the device is wherein the at least one processor determines the nonlinear velocity by: determining a variation of the velocity between the first time and the second time; applying a weight value to the variation of the velocity; adding the applied variation to the velocity of the first time; determining the added velocity as the nonlinear velocity.

## BRIEF DESCRIPTION OF THE DRAWINGS

The above and other objects, features and advantages of the present disclosure will become more apparent from the following detailed description when taken in conjunction with the accompanying drawings in which:

FIG. 1 is a block diagram of an electronic device according to an embodiment of the present disclosure;

FIG. 2 is a detailed block diagram of a processor according to an embodiment of the present disclosure;

FIG. 3 is a flowchart of a method for controlling a displaying each of the images based on an image conversion weight of each of the images in an electronic device according to an embodiment of the present disclosure;

FIG. 4 is a flowchart of a method for controlling a displaying each of the images based on an image conversion weight of each of the images in an electronic device according to another embodiment of the present disclosure;

FIGS. 5A to 5F are schematic views showing configurations for controlling a displaying each of the images based on an image conversion weight of each of the images in an electronic device according to an embodiment of the present disclosure; and

FIG. 6 is a graph showing relationships between the parameters included in Equation 1 in an electronic device according to an embodiment of the present disclosure.

## DETAILED DESCRIPTION OF EMBODIMENTS OF THE PRESENT DISCLOSURE

Embodiments of the present disclosure are described herein with reference to the accompanying drawings. In the following description, detailed descriptions of well-known functions or constructions are omitted since they would obscure the disclosure in unnecessary detail. Also, the terms used herein are to be construed according to the technical field of the present disclosure. Thus, how terms are construed may vary depending on the user's or operator's intentions or practices. Therefore, the terms used herein must be understood as not limited to the descriptions made herein.

The present disclosure relates to a technology for displaying a dynamic image based on current state information of an electronic device.

In the following description, the electronic device may be a mobile communication terminal, a PDA, a Personal Computer (PC), a laptop, a smartphone, a netbook, a television, a Mobile Internet Device (MID), an Ultra Mobile PC (UMPC), a tablet PC, a navigation device, a smart TV, a digital camera, a refrigerator, a digital watch, or an MP3.

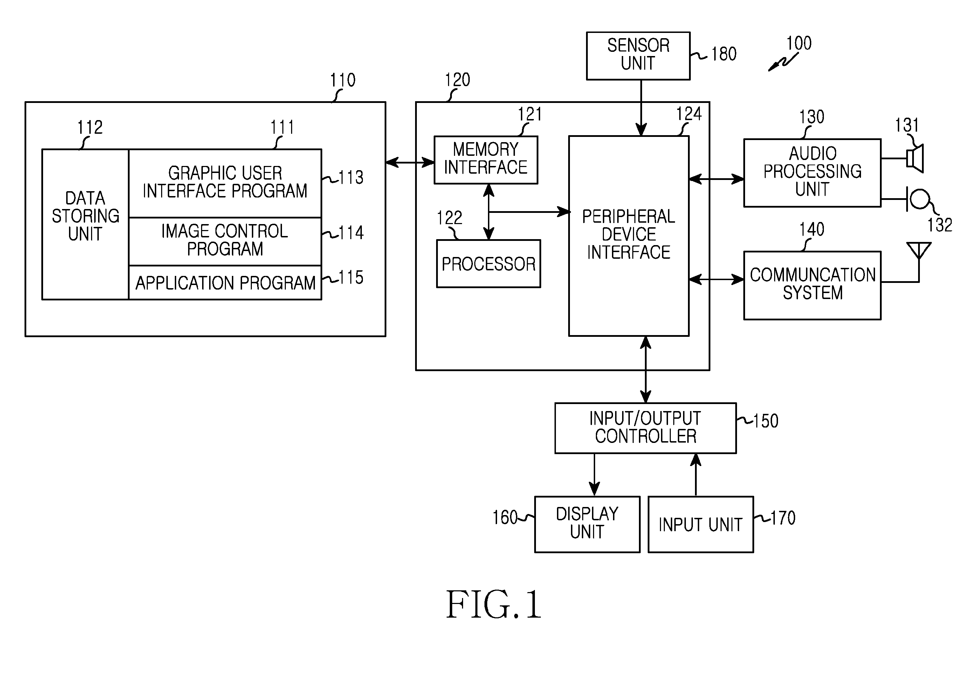

FIG. 1 is a block diagram of an electronic device according to an embodiment of the present disclosure.

As shown in FIG. 1, the electronic device 100 includes a memory 110, a processor unit 120, an audio processing unit 130, a communication system 140, an input/output controller 150, a display unit 160, an input unit 170, and a sensor unit 180. The memory 110 may comprise a plurality of memories.

The respective elements of the electronic device will be described.

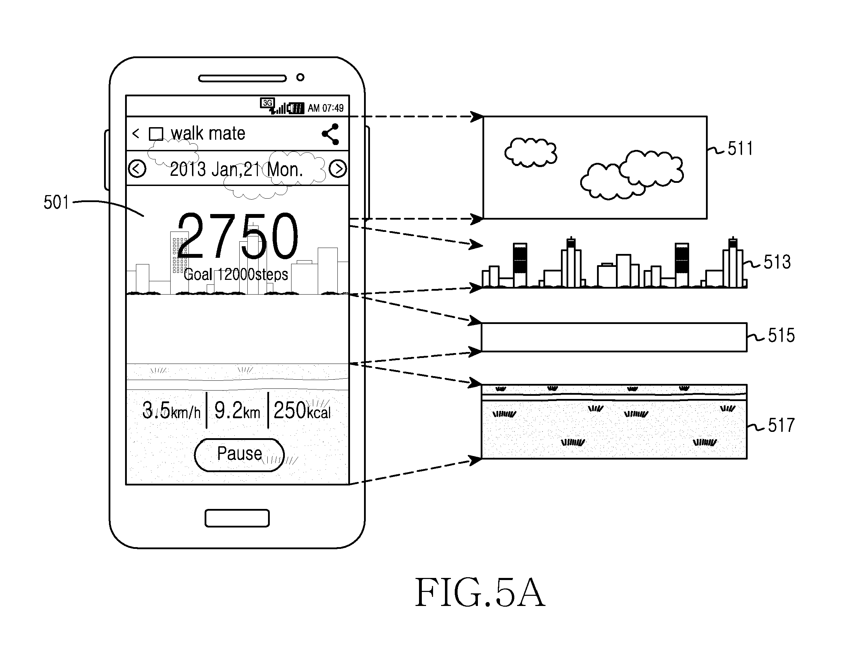

The memory 110 includes a program storing unit 111 configured to store a program for controlling an operation of the electronic device 100, and a data storing unit 112 configured to store data generated during execution of a program. For example, the data storing unit 112 may separately store a first image 511, a second image 513, a third image 515, and a fourth image 517 for a "Walk mate" program 501, as shown in FIG. 5A. As another example, the data storing unit 112 may store an image conversion weight for each of a plurality of images. The image conversion weight may be a parameter for determining an image conversion rate according to a user's exercise state, using characteristics of the perspective when, e.g., walking on a road, where the sky viewed farthest from one's eyes is barely moving, and the road viewed closest to one's eyes is rapidly changing.

The program storing unit 111 includes a Graphic User Interface (GUI) program 113, an image control program 114, and at least one application program 115. The programs included in the program storing unit 111 may be expressed as a set of instructions.

The GUI program 113 may include at least one software element for providing a graphic user interface on the display unit 160. For example, the GUI program 113 may include instructions for displaying application program information executed by the processor 122 on the display unit 160. As another example, the GUI program 113 may include instructions which display each of the images from the left to the right or from the right to the left through the image control program 114 and display the images on the display unit 160. As another example, the GUI program 113 may include instructions which display each of the images up and down through the image control program 114 and display the images on the display unit 160. In another example, the GUI program 113 may include instructions which magnify or reduce each of the images through the image control program 114 and display the magnified or reduced images on the display unit 160. In another example, the GUI program 113 may include instructions which display a slope of each of the images through the image control program 114 and display the images on the display unit 160.

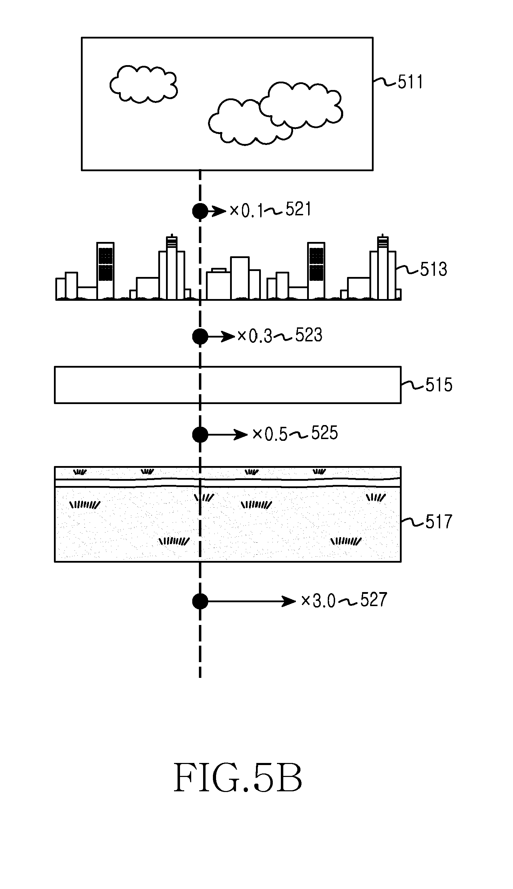

The image control program 114 may include at least one software element for displaying(or displaying) each of the images based on the current velocity of the electronic device and the image conversion weight. For example, the image control program 114 determines the image conversion weight for each of the images, as shown in FIG. 5B. Then, the image control program 114 detects the current velocity of the electronic device using a Global Positioning System (GPS) receiver, an acceleration sensor, and a terrestrial magnetism sensor. Further, the image control program 114 may detect the current velocity of the electronic device based on the user's step count per unit time. Thereafter, the image control program 114 controls each of the images to be displayed based on the current velocity of the electronic device and the image conversion weight.

Also, the image control program 114 may control each of the images to be displayed based on the current velocity and altitude of the electronic device and the image conversion weight. For example, the image control program 114 determines the image conversion weight for each of the images, as shown in FIG. 5B. Then, the image control program 114 detects a current velocity and altitude of the electronic device using a GPS receiver, an acceleration sensor, a terrestrial magnetism sensor, and a pressure sensor. Thereafter, the image control program 114 controls each of the images to be displayed based on the current velocity and altitude of the electronic device and the image conversion weight.

The application program 115 may include a software element for at least one application program installed in the electronic device 100.

The processor unit 120 includes a memory interface 121, at least one processor 122, and a peripheral device interface 124. The memory interface 121, the at least one processor 122, and the peripheral device interface 124 which are included in the processor unit 120 may be integrated in at least one integrated circuit or be implemented as separate elements.

The memory interface 121 controls an access of an element such as the processor 122 or the peripheral device interface 124 to the memory 110.

The processor 122 controls the electronic device 100 to provide various services using at least one software program. In this regard, the processor 122 executes at least one program stored in the memory 110 to provide a service corresponding to the program.

The peripheral device interface 124 controls the input/output controller 150 of the electronic device 100, and a connection between the processor 122 and the memory interface 121.

The audio processing unit 130 provides an audio interface between the user and the electronic device 100 through a speaker 131 and a microphone 132.

The communication system 140 performs a communication function for audio communication and data communication. The communication system 140 may be divided into a plurality of communication service modules supporting different communication networks. For example, the communication networks may include, but are not limited to, a Global System for Mobile communication (GSM) network, an Enhanced Data rates for GSM Evolution (EDGE) network, a Code Division Multiplexing Access (CDMA) network, a Wideband CDMA (W-CDMA) network, a Long Term Evolution (LTE) network, an Orthogonal Frequency Division Multiplexing Access (OFDMA) network, a wireless Local Area Network (LAN), a Bluetooth network, and a Near Field Communication (NFC) network.

The input/output controller 150 provides an interface between the display unit 160 and an input/output unit of the input unit 170, and the peripheral device interface 124.

The display unit 160 displays state information of the electronic device 100, characters inputted by a user, a moving picture, and a static picture. For example, the display unit 160 may display application program information executed by the processor 122 under the control of the GUI program 113. As another example, the display unit 160 may display each of the images provided from the image processing program 114 from the left to the right or from the right to the left under the control of the GUI program 113. As another example, the display unit 160 may display each of the images provided from the image processing program 114 up and down under the control of the GUI program 113. As another example, the display unit 160 may magnify or reduce and display each of the images provided from the image processing program 114 under the control of the GUI program 113. As another example, the display unit 160 may change and display the slope of each of the images provided from the image processing program 114 under the control of the GUI program 113.

The input unit 170 provides data input by a user to the processor unit 120 through the input/output controller 150. The input unit 170 may include a keypad including at least one hardware button, and a touch screen configured to sense contact information. For example, the input unit 170 may provide contact information including a finger touch sensed through the touch screen, a finger motion on the touch screen, and a finger release (i.e., removal from the touch screen surface) to the processor 122.

The sensor unit 180 provides sensing information generated by the electronic device to the processor 122 through the peripheral device interface 124. Herein, the sensor unit 180 may include at least one of a GPS receiver recognizing a motion or position of the electronic device, a terrestrial magnetism sensor, an acceleration sensor, and a pressure sensor.

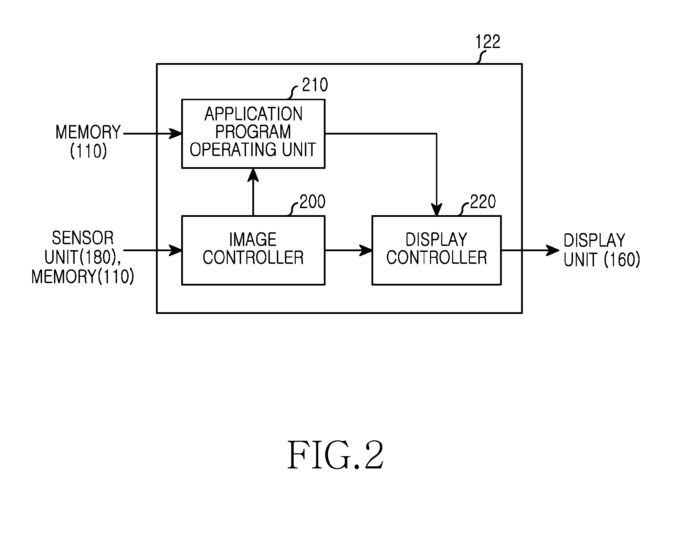

FIG. 2 is a detailed block diagram of a processor according to an embodiment of the present disclosure.

As shown in FIG. 2, the processor 122 includes an image controller 200, an application program operating unit 210, and a display controller 220.

The image controller 200 may execute the image control program 114 stored in the program storing unit 111 to control each of the images to be displayed based on the current velocity of the electronic device and the image conversion weight. For example, the image control program 200 determines an image conversion weight for each of the images, as shown in FIG. 5B. Then, the image controller 200 detects a current velocity of the electronic device using a GPS receiver, an acceleration sensor, and a terrestrial magnetism sensor. In some embodiments, the image controller 200 may detect the current velocity of the electronic device in consideration of the user's step count per unit time. Thereafter, the image controller 200 controls each of the images to be displayed based on the current velocity of the electronic device and the image conversion weight.

The image controller 200 may execute the image control program 114 stored in the program storing unit 111 to control each of the images to be displayed based on the current velocity and altitude of the electronic device and the image conversion weight. For example, the image control program 200 determines an image conversion weight for each of the images, as shown in FIG. 5B. Then, the image controller 200 detects a current velocity and altitude of the electronic device using a GPS receiver, an acceleration sensor, a terrestrial magnetism sensor, and a pressure sensor. Thereafter, the image controller 200 controls each of the images to be displayed based on the current velocity and altitude of the electronic device and the image conversion weight.

The application program operating unit 210 executes at least one program stored in the program storing unit 111 and provides a service according to the corresponding application program. The application program operating unit 210 may be provided image information considering the current velocity and altitude of the electronic device, and the image conversion weight.

The display controller 220 executes the GUI program 113 stored in the program storing unit 111 and controls a graphic user interface to be displayed on the display unit 160. For example, the display controller 220 controls information from an application program being executed by the processor 122 to be displayed on the display unit 160. As another example, the display controller 220 may control each of the images to be displayed from the left to the right or from the right to the left and displayed on the display unit 160 under the control of the image controller 200. As another example, the display controller 220 may control each of the images to be displayed up and down and displayed on the display unit 160 under the control of the image controller 200. As another example, the display controller 220 may control each of the images to be magnified or reduced and displayed on the display unit 160 under the control of the image controller 200. As another example, the display controller 220 may control the slope of each of the images to be changed and displayed on the display unit 160 under the control of the image controller 200.

In the above-described embodiment, the electronic device 100 uses the processor 122 including the image controller 200 to control a dynamic image to be displayed based on current state information of the electronic device.

In another embodiment, the electronic device 100 may include a separate image control module controlling a dynamic image to be displayed based on current state information thereof.

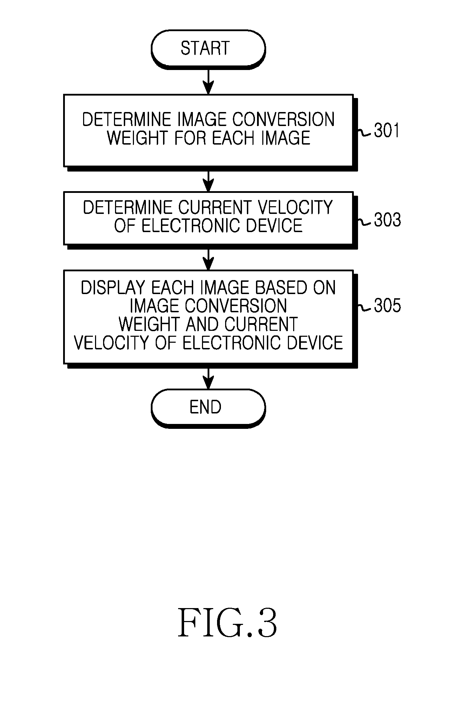

FIG. 3 is a flowchart of a method for controlling each of images to be displayed based on an image conversion weight for each of the images in an electronic device, according to an embodiment of the present disclosure.

The description will be made using an example in which an exercise state of a user of the electronic device is being monitored and provided through a "Walk mate 501" program, as shown in FIG. 5A. In such an embodiment, the electronic device may provide at least one of a current step count, a target step count, a distance traversed, a current velocity, and consumed calories through the "Walk mate" program 501.

Referring to FIG. 3, the electronic device determines an image conversion weight for each of images in step 301. The image conversion weight is a parameter for determining an image conversion rate according to a user's exercise state, using characteristics by which, when the user of the electronic device walks or runs on a road, the "sky" in the display appears as if viewed farthest from the user's eyes, i.e., is almost unchanged, and the "road" in the display appears as if viewed closest to the user's eyes, i.e., is most changed. For example, as shown in FIG. 5B, the electronic device may determine the image conversion weight 521 for a first image 511 is "×0.1", the image conversion weight 523 for a second image 513 is "x0.3", the image conversion weight 525 for a third image 515 is "x0.5", and the image conversion weight 527 for a fourth image 517 as "x3.0". As shown in the example of FIG. 5B, the first image 511 is the sky, the second image 513 is of buildings (i.e., a skyline), the third image is a river, and the fourth image is a road.

Thereafter, the electronic device determines its current velocity in step 303. For example, the electronic device may detect its current velocity using a GPS receiver. As another example, the electronic device may detect the current velocity based on the step count of a user per unit time. In this embodiment, the electronic device recognizes the user's motion or lack thereof using an acceleration sensor.

Thereafter, in step 305, the electronic device displays each of the images based on the image conversion weight and the current velocity of the electronic device. For example, when the current velocity of the electronic device is "4", the electronic device calculates the conversion rate of the first image 511 as "0.4" based on the weight "×0.1" 521 of the first image 511. Then, the electronic device displays the first image 511 from the right to the left of the display unit based on the conversion rate "0.4" of the first image 511. Also, the electronic device calculates the conversion rate of the second image 513 as "1.2" based on the weight "x0.3" 523 of the second image 513. Then, the electronic device displays the second image 513 from the right to the left of the display unit based on the conversion rate "1.2" of the second image 513. Also, the electronic device calculates the conversion rate of the third image 515 as "2" based on the weight "×0.5" 525 of the third image 515. Then, the electronic device displays the third image 515 from the right to the left of the display unit based on the conversion rate "2" of the third image 515. Also, the electronic device calculates the conversion rate of the fourth image 517 as "12" based on the weight "×3.0" 527 of the fourth image 517. Next, the electronic device displays the fourth image 517 from the right to the left of the display unit based on the conversion rate "12" of the fourth image 517

Additionally, when it is detected that the moving direction of the electronic device has changed, the electronic device may change the conversion direction of the images. For example, while each of the images may start out displayed from the right to the left based on the image conversion weight and the current velocity of the electronic device, if the moving direction of the electronic device changes, the electronic device may change the image conversion direction to the opposite direction, i.e., from the left to the right, and display the images.

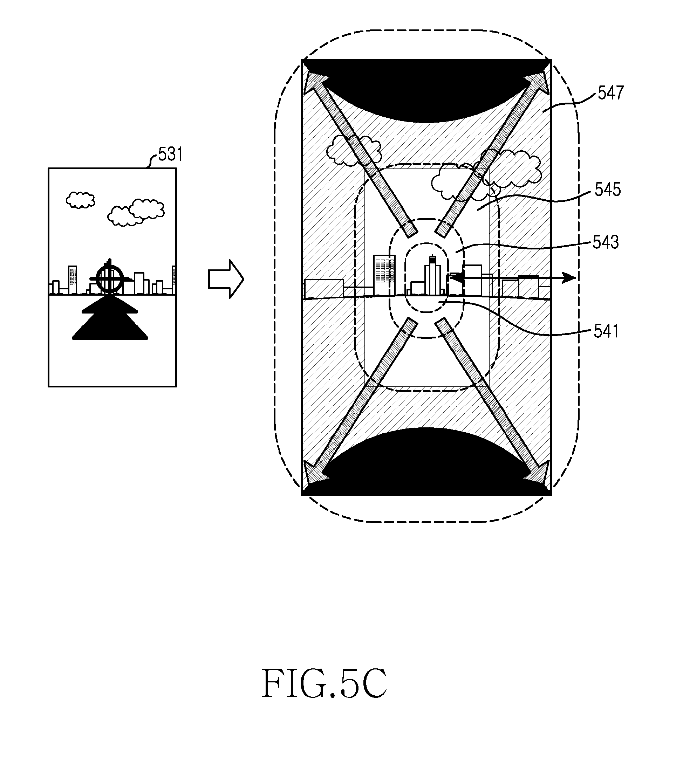

Additionally, when the current velocity of the electronic device increases, the electronic device may display an image 531 in such a manner that a first region 541 is distorted and magnified to a second region 543, the second region 543 is distorted and magnified to a third region 545, and the third region 545 is distorted and magnified to a fourth region 547, as shown in FIG. 5C.

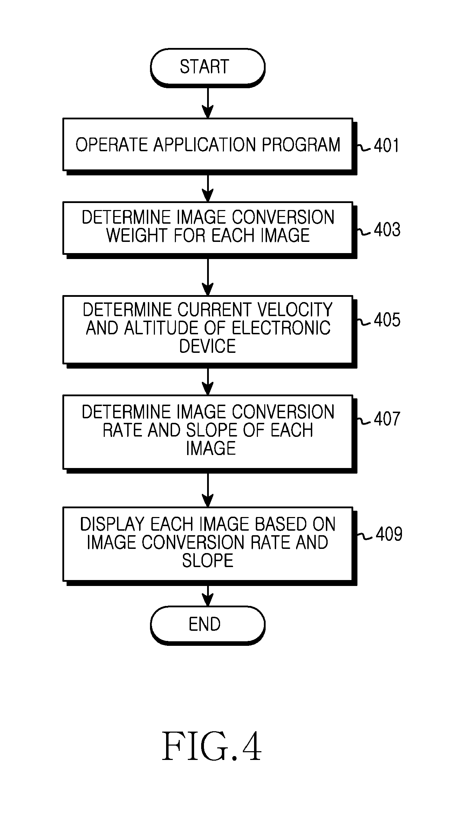

FIG. 4 is a flowchart showing a method for controlling a displaying each of images based on an image conversion weight of each of the images in an electronic device according to another embodiment of the present disclosure.

Referring to FIG. 4, the electronic device operates an application program in step 401. For example, the electronic device may monitor and provide an exercise state of a user of the electronic device through the "Walk mate 501" program, as shown in FIG. 5A. In such an example, the electronic device provides at least one of a current step count, a target step count, a moved distance, a current velocity, and consumed calories. The electronic device also displays separated images, such as the first image 511, the second image 513, the third image 515 and the fourth image 517, to images corresponding to the exercise state of the user of the electronic device. Herein, the description will be made on the supposition that the first image 511 is the sky, the second image 513 is of buildings, the third image 515 is a river, and the fourth image 517 is a road.

After the application program is operated, the electronic device determines an image conversion weight for each of the images in step 403. The image conversion weight is a parameter for determining an image conversion rate according to a user's exercise state, using characteristics by which, when the user of the electronic device walks on the road, the sky image 511 appears as if viewed farthest from the user's eyes by having the slowest conversion rate, and the road image 517 appears as if viewed closest to the user's eyes by having the fastest conversion rate. For example, as shown in FIG. 5B, the electronic device determines the image conversion weight 521 for a first image 511 is "×0.1", the image conversion weight 523 for a second image 513 is "×0.3", the image conversion weight 525 for a third image 515 is "×0.5", and the image conversion weight 527 for a fourth image 517 is "×3.0".

After the image conversion weight is determined, the electronic device determines the current velocity and altitude in step 405. For example, the electronic device may detect the current velocity using a GPS receiver. As another example, the electronic device may detect the current velocity based on the step count of a user per unit time. As another example, the electronic device may detect the current altitude using a pressure sensor. In this embodiment, the electronic device recognizes a user's motion or lack thereof using an acceleration sensor.

After the current velocity and altitude of the electronic device are determined, the electronic device calculates an image conversion rate and a slope of each of the images based on the current velocity and altitude in step 407. For example, when the current velocity of the electronic device is "4", the electronic device calculates the conversion rate of the first image 511 as "0.4" based on the weight "×0.1" 521 of the first image 511, the conversion velocity of the second image 513 as "1.2" based on the weight "×0.3" 523 of the second image 513, the conversion velocity of the third image 515 as "2" based on the weight "×0.5" 525 of the third image 515, and the conversion velocity of the fourth image 517 as "12" based on the weight "×3.0" 527 of the fourth image 517.

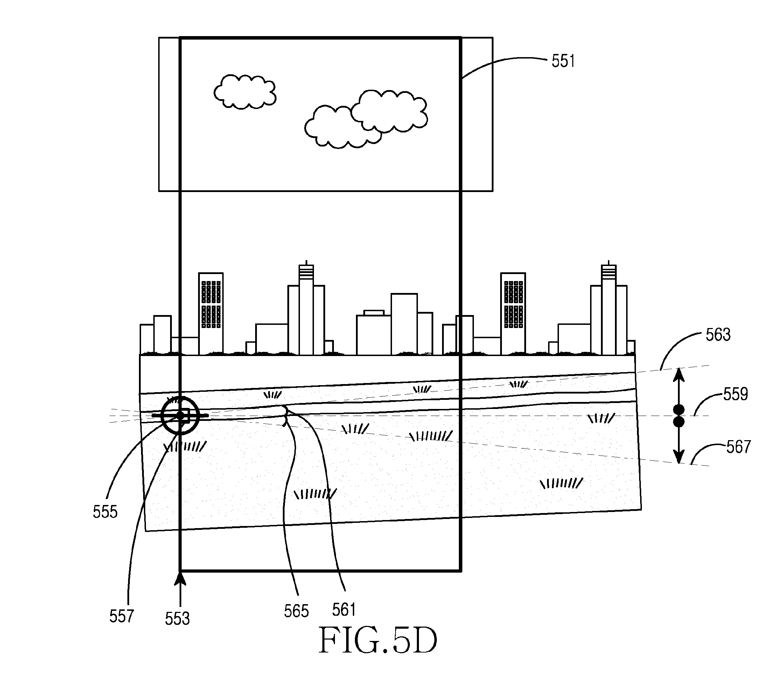

As an example of a calculation of slope, when the altitude of the electronic device at the current time is higher than that at a previous time, the electronic device determines a first reference line 563 which has an ascending slope, as indicated by a first angle 561, compared to an imaginary reference line 559 forming a right angle with the left side 553 of the display unit 551, as shown in FIG. 5D. By contrast, when the altitude of the electronic device at the current time is lower than that at a previous time, the electronic device determines a second reference line 567 which has a descending slope, as indicated by a second angle 565, compared to the imaginary reference line 559 forming a right angle with the left side 553 of the display unit 551.

Thereafter, the electronic device displays the image based on the image conversion rate and the slope in step 409. For example, the electronic device converts the first image 511 from the right to the left of the display unit based on the conversion rate "0.4" of the first image 511 and displays the converted image. Also, the electronic device converts the second image 513 from the right to the left of the display unit based on the conversion rate "1.2" of the second image 513 and displays the converted image. Also, the electronic device converts the third image 515 from the right to the left of the display unit based on the conversion rate "2" of the third image 515 and displays the converted image. Also, the electronic device converts the fourth image 517 from the right to the left of the display unit based on the conversion rate "12" of the fourth image 517 and displays the converted image. In addition, the electronic device tilts the angle of the fourth image 517 based on the first imaginary line 563, as shown in FIG. 5D. Thus, the electronic device converts the fourth image 517 from the right to the left of the display unit based on its conversion rate, and at the same time, tilts the angle of the fourth image 517 to display the converted and tilted image.

Additionally, when it is detected that the moving direction of the electronic device has changed, the electronic device may change the conversion direction of the images. For example, while each of the images starts out converted and displayed from the right to the left based on the image conversion weight and the current velocity of the electronic device, when the moving direction of the electronic device changes, the electronic device changes the image conversion direction to the opposite direction, i.e., from the left to the right, and display the images.

Additionally, when the current velocity of the electronic device has increased compared to that at a previous time, the electronic device may display an image 531 in such a manner that a first region 541 is distorted and magnified to a second region 543, the second region 543 is distorted and magnified to a third region 545, and the third region 545 is distorted and magnified to a fourth region 547, as shown in FIG. 5C.

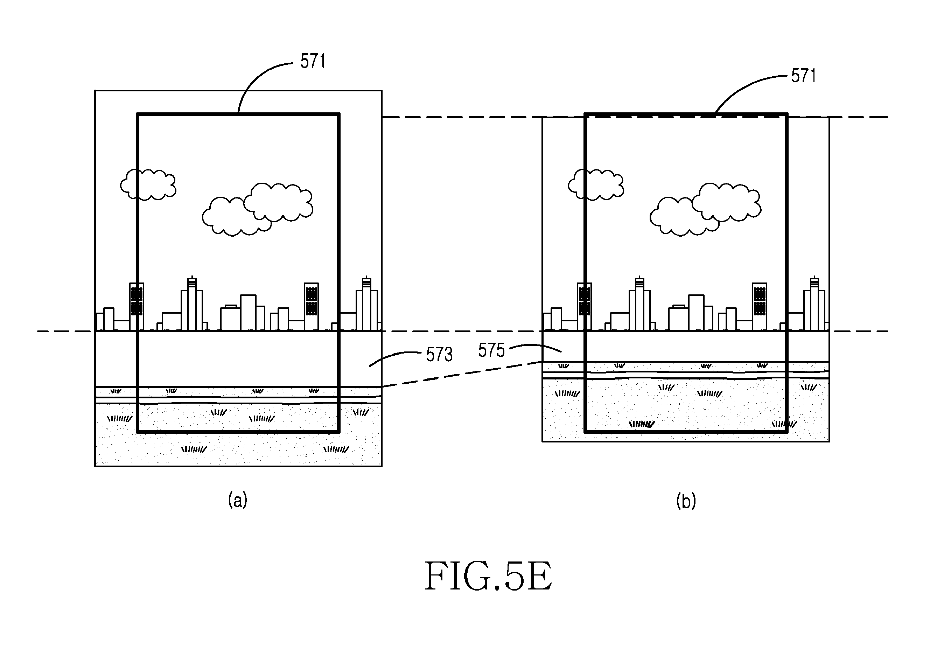

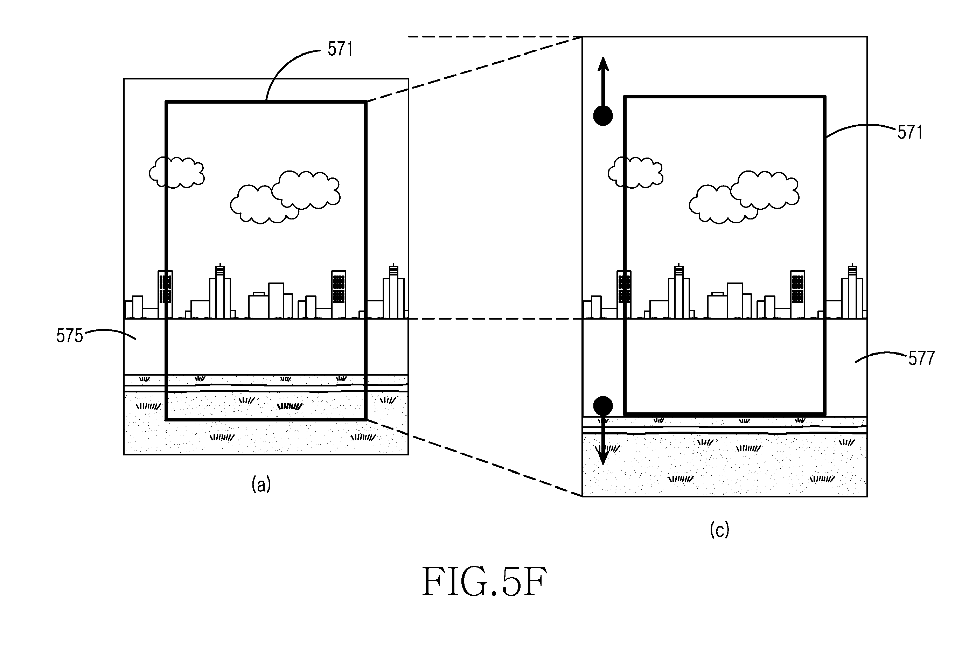

Additionally, when the altitude of the electronic device has increased, the electronic device may recognize that a user of the electronic device is travelling on an uphill road. Therefore, the electronic device reduces the display of the third image 515 on the display unit 571 from the first region 573 as shown in FIG. 5E(a) to the second region 575 as shown in FIG. 5E(b). On the other hand, when the altitude of the electronic device has decreased, the electronic device may recognize that the user of the electronic device is traveling on a downhill road. Therefore, the electronic device magnifies the display of the third image 515 on the display unit 571 from the second region 575 as shown in FIG. 5F(a) to the third region 577 as shown in FIG. 5F(c).

The above-described electronic device calculates the image conversion rate and the slope of each of the images based on the current velocity and altitude of the electronic device. When the current velocity or altitude of the electronic device changes sharply, the electronic device may perform an abrupt image conversion based on the change in current velocity and altitude.

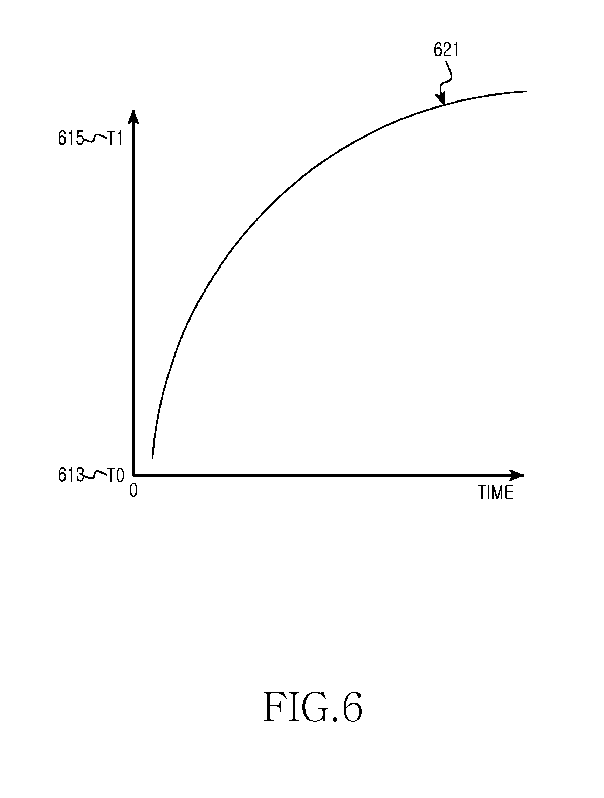

More specifically, when the current velocity or altitude of the electronic device is sharply changed, the electronic device may calculate the image conversion rate and the slope of each of the images by applying Equation (1) such that the image conversion rate or the slope is non-linearly accelerated, as shown in FIG. 6.

### Equation (1)

$$TC = T0;$$

$$TC = TC + ratio \times (T1 - TC),$$

where T0 613 is an initial velocity or an initial altitude, T1 615 is a current velocity or a current altitude, TC 621 is a calculated velocity or a calculated altitude, and ratio is a weight. In Equation (1), TC has an initial value equal to T0.

For example, when the weight is "0.2", the initial velocity or the initial altitude is "5", and the current velocity or the current altitude has abruptly increased to "10", the electronic device uses a velocity or altitude value TC which is calculated by repeatedly applying Equation (1), rather than using the current velocity/altitude T1, i.e., "10", which, when input in the methods of FIGS. 3 or 4, would result in an extreme change to the displayed images.

$$TC = 5;$$

$$TC = 5 + 0.2 \times (10 - 5) = 6;$$

$$TC = 6 + 0.2 \times (10 - 6) = 6.8;$$

That is, when the velocity is sharply changed from an initial velocity or altitude "5" to a current velocity or altitude "10", the velocity value or the altitude value used in the methods of FIGS. 3 or 4 is calculated using Equation (1), thereby ensuring a more gradual change in display by using a sequence of nonlinear values, such as "5", "6", and "6.8", rather than immediately using the current velocity or altitude "10".

Thus, the electronic device may calculate the image conversion rate or the slope of each of the images based on an nonlinear velocity or altitude value which is calculated using Equation 1.

In the above-described embodiment, the electronic device converts each of the images, such as the first image 511, the second image 513, the third image 515, and the fourth image 517, which are separated from one another, according to the exercise state of the user, as shown in FIG. 5A.

In another embodiment, the electronic device may divide the display unit thereof into a plurality of regions and control the dynamic appearance of data displayed in each of the plurality of regions according to the exercise state of the user thereof.

As described above, by displaying each of images based on the current velocity and the altitude of the electronic device, the user of the electronic device may be intuitively provided information according to the user's current moving state.

In some embodiments, of the present disclosure, some or all of the components may be implemented or provided at least partially in firmware and/or hardware, including, but not limited to one or more application-specific integrated circuits ("ASICs"), standard integrated circuits, controllers executing appropriate instructions, and including microcontrollers and/or embedded controllers, field-programmable gate arrays ("FPGAs"), complex programmable logic devices ("CPLDs"), and the like.

Some or all of the system components and/or data structures may also be stored as contents (e.g., as executable or other machine-readable software instructions or structured data) on a non-transitory computer-readable medium so as to enable or configure the computer-readable medium and/or one or more associated computing systems or devices to execute or otherwise use or provide the contents to perform at least some of the described techniques. Moreover, in alternative embodiments, hard-wired circuitry may be used in place of or in combination with software instructions to implement the disclosure. Thus, embodiments of the disclosure are not limited to any specific combination of hardware circuitry and software.

The term "non-transitory computer-readable medium" as used herein refers to any medium that participates in providing instructions to a processor for execution, and may take many forms, including but not limited to, non-volatile media, volatile media, and transmission media. Non-volatile media includes, for example, a floppy disk, a flexible disk, hard disk, magnetic tape, or any other magnetic storage medium, a CD-ROM, DVD, and/or any other optical storage medium. Volatile media includes dynamic random access memory ("DRAM"), RAM, PROM, EPROM, FLASH-EPROM, and the like.

While the disclosure has been shown and described with reference to certain embodiments thereof, it will be understood by those of ordinary skill in the art that various changes in form and details may be made therein without departing from the spirit and scope of the disclosure as defined by the appended claims and their equivalents. Therefore, the disclosure is not limited by the detailed description of the disclosure and is defined only by the appended claims and their equivalents, and all differences within the scope of the appended claims and their equivalents will be construed as being included in the present disclosure.

**Claims**

1. A method in an electronic device comprising:

    determining an image conversion weight for each of a plurality of images shown on a screen of the electronic device;
    determining a current velocity of the electronic device; and
    displaying each of the plurality of images based on the image conversion weight and the current velocity.

2. The method of claim 1, wherein determining the current velocity comprises:

    determining the current velocity using at least one of a Global Positioning System (GPS) receiver, an acceleration sensor, and a terrestrial magnetism sensor.

3. The method of claim 1, wherein displaying each of the plurality of images comprises:

    displaying each of the plurality of images from the left to the right or from the right to the left based on the image conversion weight and the current velocity.

4. The method of claim 1, further comprising:

    determining a moving direction of the electronic device.

5. The method of claim 4, wherein, when the moving direction is changed, a direction of displaying the plurality of images is changed to correspond to the moving direction.

6. The method of claim 1, wherein displaying each of the plurality of images comprises:

    based on the image conversion weight and the current velocity, magnifying or reducing, and then displaying, each of the plurality of images.

7. A method in an electronic device comprising:

    determining an image conversion weight for each of a plurality of images;
    determining a current velocity and altitude of the electronic device; and
    displaying each of the plurality of images based on the image conversion weight, the current velocity, and the altitude.

8. The method of claim 7, wherein displaying each of the plurality of images comprises:

    displaying each of the plurality of images from the left to the right or from the right to the left based on the image conversion weight and the current velocity; and
    changing and displaying a slope of each of the images based on the altitude.

9. The method of claim 7, further comprising:

    determining a moving direction of the electronic device.

10. The method of claim 9, wherein, when the moving direction is changed, a direction of displaying the plurality of images is changed to correspond to the moving direction.

11. The method of claim 7, wherein displaying each of the plurality of images comprises:

    based on the image conversion weight and the current velocity, magnifying or reducing, and then displaying, each of the plurality of images .

12. The method of claim 7, wherein displaying each of the plurality of images comprises:

    based on the image conversion weight and the current altitude, either magnifying or reducing, and then displaying, each of the plurality of images .

13. The method of claim 7, wherein displaying each of the plurality of images comprises:

displaying each of the plurality of images up and down based on the image conversion weight, the current velocity, and the current altitude.

14. An electronic device comprising:

at least one processor;
at least one sensor unit; and
at least one non-transitory computer-readable medium having program instructions recorded thereon, the program instructions configured to have the at least one processor perform the steps of:

determining an image conversion weight for each of a plurality of images shown on a screen of the electronic device,
determining a current velocity of the electronic device, and
displaying each of the plurality of images based on the image conversion weight and the current velocity.

15. The electronic device of claim 14, wherein the at least one processor displays each of the plurality of images from the left to the right or from the right to the left based on the image conversion weight and the current velocity.

FIG.1

EP 2 779 153 A1

FIG.2

START

DETERMINE IMAGE CONVERSION
WEIGHT FOR EACH IMAGE ⟿301

DETERMINE CURRENT VELOCITY
OF ELECTRONIC DEVICE ⟿303

DISPLAY EACH IMAGE BASED ON
IMAGE CONVERSION
WEIGHT AND CURRENT
VELOCITY OF ELECTRONIC DEVICE ⟿305

END

FIG.3

START

OPERATE APPLICATION PROGRAM ⟿401

DETERMINE IMAGE CONVERSION
WEIGHT FOR EACH IMAGE ⟿403

DETERMINE CURRENT VELOCITY
AND ALTITUDE OF ELECTRONIC
DEVICE ⟿405

DETERMINE IMAGE CONVERSION
RATE AND SLOPE OF EACH
IMAGE ⟿407

DISPLAY EACH IMAGE BASED ON
IMAGE CONVERSION RATE AND
SLOPE ⟿409

END

FIG.4

FIG.5A

EP 2 779 153 A1

~511

×0.1~521

~513

×0.3~523

~515

×0.5~525

~517

×3.0~527

FIG.5B

FIG.5C

FIG.5D

FIG.5E

EP 2 779 153 A1

(a)

(c)

FIG.5F

EP 2 779 153 A1

FIG.6

Europäisches
Patentamt

European
Patent Office

Office européen
des brevets

## EUROPEAN SEARCH REPORT

Application Number

EP 14 15 9775

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/270522 A1 (FINK RYAN [US]) 3 November 2011 (2011-11-03) * paragraph [0027] - paragraph [0041]; figures 1-3 * | 1-15 | INV. G09G5/14 A63B71/06 |
| X | US 2011/242136 A1 (YAMADA TAKESHI [JP] ET AL) 6 October 2011 (2011-10-06) * paragraph [0095] - paragraph [0114]; figures 21-26 * | 1-15 | |
| Y | US 6 837 827 B1 (LEE WAI C [US] ET AL) 4 January 2005 (2005-01-04) * column 7, line 32 - column 9, line 20; figures 6-11 * * column 10, line 8 - line 48; figure 13 * | 1-15 | |
| Y | EP 2 073 192 A1 (KONAMI DIGITAL ENTERTAINMENT [JP]) 24 June 2009 (2009-06-24) * paragraph [0064] - paragraph [0084]; figure 1 * * paragraph [0134] - paragraph [0159] * | 1-15 | |
| A,P | Dmitri Kornushin: "WALK MATE App for IPhone on Behance", , 31 March 2013 (2013-03-31), pages 1-5, XP055126297, Dnepropetrovsk, Ukraine Retrieved from the Internet: URL:https://www.behance.net/gallery/789415 9/WALK-MATE-App-for-IPhone [retrieved on 2014-07-01] * the whole document * | 1,7,14 | TECHNICAL FIELDS SEARCHED (IPC) G09G A63B |

The present search report has been drawn up for all claims

| Place of search | Date of completion of the search | Examiner |
|---|---|---|
| Munich | 3 July 2014 | Morris, David |

EPO FORM 1503 03.82 (P04C01)

**ANNEX TO THE EUROPEAN SEARCH REPORT
ON EUROPEAN PATENT APPLICATION NO.**

EP 14 15 9775

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2014

| Patent document cited in search report | | Publication date | Patent family member(s) | | Publication date |
|---|---|---|---|---|---|
| US 2011270522 | A1 | 03-11-2011 | NONE | | |
| US 2011242136 | A1 | 06-10-2011 | NONE | | |
| US 6837827 | B1 | 04-01-2005 | US | 6837827 B1 | 04-01-2005 |
| | | | US | 7601098 B1 | 13-10-2009 |
| | | | US | 2005107216 A1 | 19-05-2005 |
| | | | US | 2005288154 A1 | 29-12-2005 |
| | | | US | 2007149362 A1 | 28-06-2007 |
| | | | US | 2008096727 A1 | 24-04-2008 |
| | | | US | 2010009811 A1 | 14-01-2010 |
| EP 2073192 | A1 | 24-06-2009 | CN | 101523482 A | 02-09-2009 |
| | | | EP | 2073192 A1 | 24-06-2009 |
| | | | JP | 4142073 B2 | 27-08-2008 |
| | | | JP | 2008096776 A | 24-04-2008 |
| | | | KR | 20090052391 A | 25-05-2009 |
| | | | TW | 200828261 A | 01-07-2008 |
| | | | US | 2010118055 A1 | 13-05-2010 |
| | | | WO | 2008044768 A1 | 17-04-2008 |

EPO FORM P0459

For more details about this annex : see Official Journal of the European Patent Office, No. 12/82